# EUROPEAN PATENT APPLICATION

(11) **EP 2 664 402 A1**
(43) Date of publication of application: **20.11.2013**
(21) Application number: 12168525.9
(22) Date of filing: 18.05.2012
(51) Int. Cl.: B23D 57/00, B28D 5/00, B28D 5/04

(54) **Wire saw and process for cutting work pieces, in particular work pieces of hard and brittle material**

(71) Applicant: Meyer Burger AG, 3600 Thun (CH)
(72) Inventor: Haenni, Roland, 8049 Zurich (CH); Huggenberger, Stefan, 5223 Riniken (CH)
(74) Representative: Patentbüro Paul Rosenich AG

(57) **Abstract**

The invention relates to a wire saw and a process for cutting a work piece especially hard or brittle work pieces. A wire saw (W) comprises a base structure (2) and at least two wire-guiding rollers (1, 1') rotatable mounted in the base structure (2) and a wire web (3a) composed by one or more cutting wires (3) wounded around the wire-guiding rollers (1, 1') defining a working plane (3b) facing the work piece (4). Furthermore, it has a work piece handling unit (5) with a pivotable handling arm (6) mounted on the base structure (2) pivotable along an angular path (6b) around a pivoting axis (6a) to and through the wire web (3a) for cutting the work piece (4). The essence of the wire saw (W) is that the pivotable handling arm (6) is provided with at least one adjusting unit (Z) for adjusting an angular deviation (d) between the pivoting axis (6a) and the at least one cutting wire (3). The process comprises the steps of detecting an actual angle between the at least one cutting wire (3) and one or more shafts (6c), and comparing the detected actual angle values with the desired angle, then adjusting the actual position of the at least one shaft (6c) preferably by using the adjusting unit (Z) to eliminate the angular deviation (d) from the desired angle between the cutting wire (3) and the pivoting axis (6a).

## Description

The invention relates to a multiple wire saw for cutting especially hard or brittle work pieces according to the preamble of claim 1, and to a method for cutting such work pieces, especially for operating such a wire saw, according to the preamble of claim 14.

Wire saws are used for cutting or slicing a work piece, in particular a work piece of hard and brittle material, such as silicon and sapphire, into thin wafers. Such devices typically have at least two wire-guiding rollers mounted in a base structure, and a wire web formed by one cutting wire that runs over the wire-guiding rollers. Also multiple cutting-sections of multiple cutting wires may be used. Cutting wires may be moved in a reciprocating manner, these are used mostly for diamond wires and sometimes also for slurry-processes, although it is normal when utilizing slurry-processes to pull the wire through the slurry in only one direction. Note that there are always at least two wire webs. One upper wire web that is used for cutting the work piece and a lower wire web, that is built because the same number of wires in a different plane exists below the wire guide rollers. In this document, 'wire web ' is used for the wire web that is used for cutting the work piece, unless explicitly stated differently.

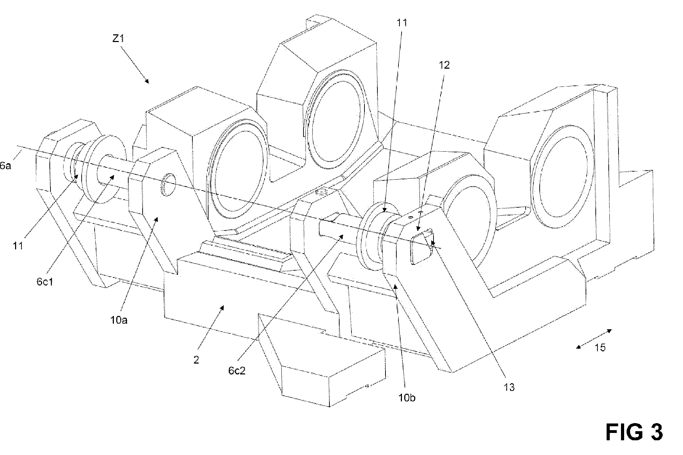

In the JPA11188602, such a wire saw is disclosed, wherein a pair of grooved rollers are provided while parallel cutting wires with abrasive grains attached to it form the cutting web. See Fig. 3. Because the running wire train (wire web) acts against the work piece, a great number of wafers can be cut at the same time.

See Fig.3 of the JPA11188602. The construction of said Fig.3 provides the wire web and wire rollers respectively on a support structure and a pivotable handling arm carry a work piece. When said pivotable handling arm is moved toward said wire web the work piece moves along an arched (circular) travel path. That means that the relative movement of the work piece to the wire web is not linear but arched. This leads to uneven surfaces of the wafers if the cutting wires in the wire web are not in alignment with a plane defined by said arched travel path.

As normally a single cutting wire is wound around said wire rollers and the rills or grooves of the two wire guide rollers are not aligned, the wire segments crossing from one roller to the other run out of parallel with respect to the plane of the grooves on the wire rollers. The grooves themselves are parallel but the wire runs in a spiral around the rollers, thus even if the grooves of the rolls are aligned perfectly, the wire segments between the rollers may not extend perpendicularly to the axis of the rollers, depending if the wires go from one rill to the next in the upper or lower wire web. Hence if the axis of the handling arm is parallel to the axes of said wire rollers, the above mentioned misalignment occurs.

On the other hand is this known device utilizing the pivotable handling arm compact compared to other saws known in the Art. For that reason the skilled persons tried to build the wire saw as precise as possible in order to have the wires in the wire web in the proper angle relative to the work piece in the handling arm and/or accepted the uneven wafer surfaces.

Such disadvantageous relative lateral displacement of the wire guide rollers and hence the uneven wafer surfaces do not occur in a linear feeding unit disclosed for instance in EPA0980303 or DEA10220640.

Pressing a work piece linearly through the wire web will never create the above mentioned uneven surfaces. For that reason these prior art documents do not teach the skilled person on how to avoid uneven surfaces when using pivotable handling arms for carrying the work piece as in Fig.3 of the JPA11188602. Nevertheless these documents provide some alignment of the work piece fixed on a vertically movable feeding unit with respect to the horizontally arranged cutting wires.

Other alignment means using a goniometry-type device with respect to a fixed wire web are disclosed in the DE-19517107 and the US-5099820 and means with a micrometer screw for an inclination of the work piece is shown in the US-6371101. None of those alignment means is provided for avoiding uneven surfaces of the wafers to be produced by cutting the work piece.

For a high quality of the sawing process and of the resulting work pieces namely wafers or slices, it is of great importance that the work piece is fed through the wire web evenly and in a very precise manner. Already small deviations can lead to a quality degradation of the wafers.

Wafer quality is determined in the art by the terms "TTV", "bow" and "warp". "TTV" means the total thickness variation and is defined as the maximum variation in the wafer thickness. "Bow" is defined as the concavity, curvature, or deformation of the wafer centreline independent of any thickness variation. "Warp" is defined as the deviation from a plane of a slice or wafer centreline containing both concave and convex regions. An acceptable wafer quality requires nowadays reducing these parameters to be as small as possible. With a device according to Fig.3 of the JPA11188602 there are limits to follow these needs. If the holding devices (rocking unit) for holding the work piece on the pivotable handling arm (150,M,S in said Fig.3) would be adapted with alignment means of the prior Art - mentioned above - the problem of uneven wafer surfaces could not be solved.

Often it is not only the outer shape of a work piece which is relevant for the cutting process, in some cases it will be a particular crystal axis of the work piece (ingot or core or brick).

The object of the present invention is therefore to improve the quality and accuracy of the cut products (slices or wafers) compared to the prior art mentioned in Fig.3 of the JPA11188602. A further object is to allow an alignment of the work piece in an easy and highly precise manner, which makes sure that the work piece is fed in a precise manner through the wire web by an improved arched path of the work piece handling unit to reach the possible highest quality values of TTV, bow and warp of the cut products.

These objects have been solved according to the present invention by the features of the independent claims. Advantageous further embodiments are disclosed in the drawing figures, their description and in the dependent claims.

The essence of the present invention lies in that the pivoting or rotating axis of the pivotable handling arm of the work piece handling unit is adjustable relative to the axes of the wire rollers and hence relative to the section of cutting wires between the rollers and in the wire web respectively.

In order to have a clear definition this application defines a (horizontal) working plane facing the work piece to be cut. This working plane is to be understood the mathematical plane in which the wire web (or the axes of the cutting wire(s)) cut the brick normally lies when not cutting and ignoring bending of the cutting wire under gravitational forces. However in some cases the wire web might consist of only a single cutting wire, making just one or even only half a loop around the wire guide rollers. In the latter case the wire only traverses the cutting space once. Then it is still the same plane as it would be if there were more than one cutting wires. The wire web extending parallel to the direction of the axes of the wire guide rollers. Normally this working plane is horizontal, but it could be also oblique to horizontal. The term horizontal is to be understood as the 90° opposite of vertical so it is the relation between the horizontal and vertical which is meant in this application and not necessarily the world horizontal and the world vertical. However in most cases these will be aligned with the system horizontal and vertical. The vertical is defined by any radial plane of the axes of the wire guide rollers or pivoting axis, whatever is used as reference. All planes which are parallel to such radial plane are understood to be vertical and hence any planes having an angle of 90°with those planes are understood to be horizontal. This application further defines a first vertical axial plane through the at least one cutting wire in the wire web and a second vertical axial plane through the pivoting axis of the handling arm . These planes are basically in an 90° angle to the working plane. So a cutting wire segment between the rollers lies ―in pre-use status, as long as the work piece does not deform the cutting wire - fully in the working plane and in the said first vertical axial plane. If the wire is deformed, it still lies within the first vertical axial plane (ignoring forces of the work piece pushing the wire out of this working plane) but may be it moves out of the working plane along a bow.

To put it in other words: In order to have the above conditions and a proper cutting of the wafers according to the invention, a radial plane (a plane perpendicular to the pivoting axis) through the pivoting axis must coincide with the wire segments between the rollers.

Hence the wire saw is provided with at least one adjusting unit for adjusting an angular deviation from the desired angle between the at least one cutting wire segment and the pivoting axis of the pivotable handling arm. The wire segment is that part of the wire, or actually a line fragment describing part of the wire between the wire guide rollers, that would touch the work piece during cutting or is used for cutting. When not cutting, the wire is taught to be a straight line, ignoring bending under gravitational forces, which normally is a good approximation. During use, the wire moves in axial direction (sawing movement), the describing line does not. In other words, as an inventive step a device is foreseen for bringing all radial planes of the pivoting axis parallel or as parallel as possible to all cutting wires in the working plane. So that each cutting wire in the working plane lies in a radial plane of the pivoting axis.

According to the present invention, at least the pivoting axis of the pivotable handling arm is adjustable relative to the base construction (which supports the wire rollers) by the proposed adjusting unit, preferably within a plane essentially parallel or parallel to the plane of the wire web. The angle between the cutting wire(s) and the pivotable handling arm may be defined as the angle enclosed between the wire(s) and the radial plane(s) (the plane which is perpendicular to the (imaginary) rotational axis of the arm (which is defined by the pivoting axis) of the pivoting axis, measured in the plane of the wire web or working plane respectively.

Note that the pivotable handling arm may be moved relative to the wire guides rollers or vice versa. Both version are covered by the invention.

A further element of improved cutting with the invention might be a further adjusting device for adjusting the work piece relative to the cutting wires and the handling are respectively with respect to a characterizing plane of the work piece. The characterizing plane may be an outer plane (or in case of a cylindrical work piece, just a line on the cylinder surface or a tangential plane respectively) of the work piece. Since the cutting should be done relative to the crystal planes of the work piece, this is only true if the outer surface is perfectly in alignment with the internal crystal structure. If the plane deviates from the perfect alignment to the crystal structure more than can be allowed, the characterizing plane may be chosen to be an imaginary plane relative to the crystal structure. For example when cutting silicon for wafers for solar cells, the characterizing plane normally is parallel to the (100) plane of the crystal (Bravais-Miller convention, see:
http://www.cleanroom.byu.edu/EW_orientation.phtml.) The characterizing plane for sapphire is the c-plane (0001) for epitaxial growth of III-V and II-VI compounds. For silicon on sapphire it is the r-plane (1012).

The above mentioned features regarding the adjustment of the pivoting axis allow an exact adjustment of the work piece with respect to the cutting wires by means of adjusting the complete handling and/or carrying unit relative to the base construction, even with varying direction of the wires. Every systematic offset due to misalignment of the work piece mounted on the pivotable handling arm and the wire web, can be minimized or omitted totally by an additional adjusting device on the handling arm. In particular the work piece mounting device should allow an adjustment of the work piece relative to the handling arm in order to allow the adjustment in regard of the characterizing plane. The great benefit of the invention is that this adjustment can be done after the handling arm is proper aligned with the cutting wires in order to cut plane wafers.

The support of the work piece handling unit by at least one pivoting axis can be very precise, stiff and with only small clearance. Hence it is better than that of the prior art.

The invention can be further improved by an additional rocking unit. The advantages of an additional rocking unit associated with the pivotable handling arm (e.g. greater process window, minimizing the wire contact, oblique orientation of the work piece to the wire web) can be fully exploited, because the rocking movement of rocking unit has no effect on the lateral position of the cutting zones with respect to the cutting wires, provided the rocking axis of said optional rocking unit is parallel to the pivoting axis. If the work piece is then mounted in a proper position relative to the rocking axis, an optimum is reached: The work piece is then cut in a precise manner ,even when it is rocked by the rocking unit for faster cutting, regardless of the range of degrees of deviation of the cutting wires relative to the base structure.

In a further embodiment of the invention, at least the pivoting axis, and also the rocking axis which should be parallel to the pivoting axis, is defined by at least one shaft each carrying the pivotable handling arm and the rocking unit. These shafts are supported in the base structure at least at two supporting structures, one side of the at least one shaft may be movably arranged in said supporting units in a direction having at least one component parallel to the said working plane . The other side may in this case be rotatably mounted to its supporting unit to allow the movement. According to the invention at least one of said supporting structures can be movable by the inventive adjusting unit in a direction having at least one component parallel to the cutting wires.

To summarize this variant: The grooves of the wire guide rollers are parallel to each other and lie each in a radial plane of the wire guide roller axes.

The section of the cutting wire between said wire guide rollers do not because often the wire guide rollers and their grooves are not perfectly aligned. The rocking axis is parallel to the pivoting axis. The pivoting axis is according to the invention adjustable relative to the axes of rotation of the wire guide rollers and the base structure respectively.

The work piece can be adjustable relative to the rocking axis and the pivoting axis respectively (to adjust a cut relative to a particular plane of the work piece ― eg. a crystal plane.

For this embodiment of the invention it is of advantage when instead of a single pivoting shaft, at least two axially spaced apart shafts are provided determining together the pivoting axis. In this arrangement, at least one of the supporting structures of both shafts is to be designed - as part of the adjusting unit -, to be movable in a direction parallel to the cutting wires and then to maintain its adjusted spatial orientation. This permits to locally adjust one of the support structures and thereby the orientation of at least one of the shafts for adjusting the predetermined orientation of the pivoting axis. By using two or more ― in their nominal positions theoretically coaxially arranged - shafts instead of a single pivoting shaft, one part shaft may be fixedly attached to the support, while the other shaft can be mounted rotatable adjustable but still stable because of its shorter length.

It is preferred that at least one of the shafts is beard in at least one bearing arrangement allowing a slight angular adjustment of the shaft: Meaning that the inner ring and the outer ring of the bearing extend in planes that make a small angle. This is an easy way to connect the pivotable handling arm and the rocking unit to the base structure. With such bearing arrangement ― being also part of the adjusting unit of the invention - corrective adjusting of the pivoting axis (adjustments) are possible in an easy and simple manner, while keeping the connections without clearance. The pivotable handling arm and the shaft may be interconnected thru the at least one bearing mounted on the at least one shaft .Preferably two bearings are used: one for each shaft.

The bearings may be ball bearings or any other type of ordinary bearing that allow the above corrective adjustments. Since the angle of the corrective movement is small, the bearings do not have to be special ones. The shaft parts are currently arranged about 1'200 mm apart in our prototype, and the right shaft is moved up to about 4 mm for the corrective movement, resulting in an angle of 0.19 degrees (11 angular minutes) of the pivoting axis.

The supporting structure of the shaft(s) can be adjustable with respect to the base structure. However the preferred embodiment is that the end of one shaft may be displaceable by means of a wedge abutting against the supporting structure and the base structure respectively. The wedge is movable with respect to the shaft and the support structure respectively. Here it is of advantage that the wedge allows a very precise, simple and fine adjustment possibility, with only one direction of displacement. Moreover, the arrangement may be made very stiff. The weight of the pivotable handling arm and, to a lesser extent, the weight of the work piece assists the adjustment and the secure and free of play holding of the shaft(s) in the support structure(s). Preferably, the wedge of the adjusting unit may be displaced axially by means of an adjustment bolt, to allow for a precise and easy movement of the wedge.

In a further preferred embodiment, at least one of the supporting structures is mounted on a member rotatably supported around an axis parallel to the corresponding shaft. Said axis being held in the base structure. This construction has movement direction components in at least two directions and can be implemented with less friction than the linear adjusting arrangement.

Moreover, this embodiment of the adjusting unit may have a lever on the rotatable supporting member and an adjustment bolt can be provided for acting on the lever and thereby on the supporting member. Again, this feature allows a precise and easy movement of the rotatable member and eventually the supporting structure for the work piece handling unit. Preferably, the distance between the axis of the rotatable member and that of the shaft is considerably greater than the displacement in a direction parallel to the cutting wires, to achieve a minimal component of the movement in the undesired direction.

The adjusting unit can optionally be provided with a sensor arrangement for detecting and comparing the actual angle between at least one cutting wire and any of the pivoting axis shaft parts or a preselected characterizing plane of the work piece. In an further embodiment, the sensor arrangement can be connected to a control system operating any one of the adjusting members, among others the wedge and/or the rotatable member and/or the movable supporting structure and/or any of the adjustment bolts, or the like, to eliminate the deviation from the desired angle (e.g. 90°) between the at least one cutting wire and any of the shafts.

When using the method according to the present invention for cutting a work piece, especially hard or brittle work pieces, preferably by operating a wire saw according to the invention, at least the following steps are to be carried out:
●Determining an actual angle between at least one cutting wire and a radial plane through the rotation axis of the pivotable handling arm (pivoting axis);
● Comparing the detected actual angle value with the desired nominal angle value (90 degree) ;
● Adjusting the actual position of the at least one shaft, preferably by using an adjusting unit to eliminate, but at least to minimize the angular deviation from the desired angle between the cutting wire and the pivoting axis.

Preferably, this method may comprise a further step of adjusting two supporting units for the shafts - these supporting units are mounted preferably on a rotating member each ― and may be pivoted in opposite directions. If each shaft part is mounted on a rotating member and the members are rotated in opposite directions, both supporting units are lowered or raised simultaneously. So when they are adjusted the pivoting or rocking axis is turned in a plane parallel to the plane of the cutting wires, while omitting a tilting movement in any other direction.

The same effect can be achieved when the wedge system is used at both shafts. In such a device the one wedge would work on one side of the part shaft and the other wedge would work on the other side of the other part shaft.

Further advantages, features and details of the invention can be gathered from the following specification, describing embodiments of the invention and referring to the figures. The features recited in the claims and in the specification, respectively, can be combined either individually or together. The list of reference numerals is also part of the disclosure.

The drawings illustrating a few embodiments of the wire saw according to the present invention are described in correlation and jointly. The same reference characters are used in the drawings for basically the same parts; reference characters with different indices are used for functionally identical or similar parts.

In the drawings:
- Fig. 1: shows a first embodiment of a wire saw according to the present invention in panoramic view,
- Fig. 2: a schematic representation of the misalignment problem in wire saws of the state of the art,
- Fig. 3: shows a part of the wire saw of Fig. 1, that is, a first embodiment of an adjustment unit according to the invention for adjusting a pivoting axis, using a wedge,
- Fig. 4: shows a second embodiment of an adjustment unit according to the invention, using a pivoting member,
- Fig. 5: is a schematic representation of how the misalignment problem has been solved according to the present invention
- Fig.6: shows a side view on the embodiment of Fig.1

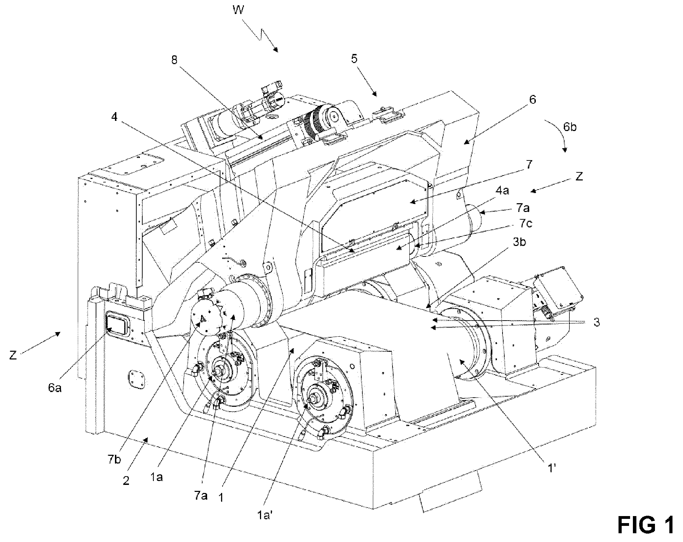

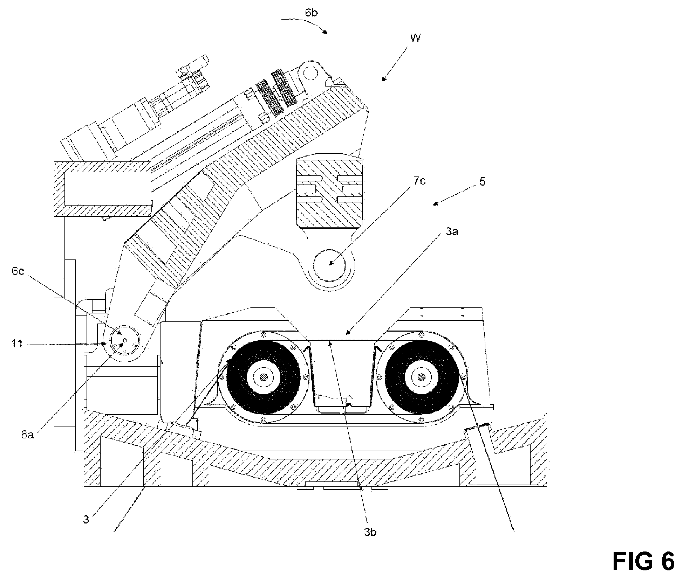

Fig. 1 shows a preferred embodiment of a wire saw W according to the present invention comprising two wire-guiding rollers 1 and 1' rotatably mounted on a base structure 2. The rotation axes of said rollers 1 and 1' are designated by 1 a and 1 a', respectively. The rotation axes 1 and 1' are meant to be parallel to each other. In Fig. 1 a cutting wire 3 is provided and wound in several spiral loops around the wire-guiding rollers. Said cutting wire 3 is running ―guided in parallel grooves - over both wire-guiding rollers 1 and 1' in a common horizontal plane, and parallel to each other, defining a so-called wire web 3a (see Fig.6) in a working plane 3b facing a work piece 4 to be cut or sliced into thin wafers.

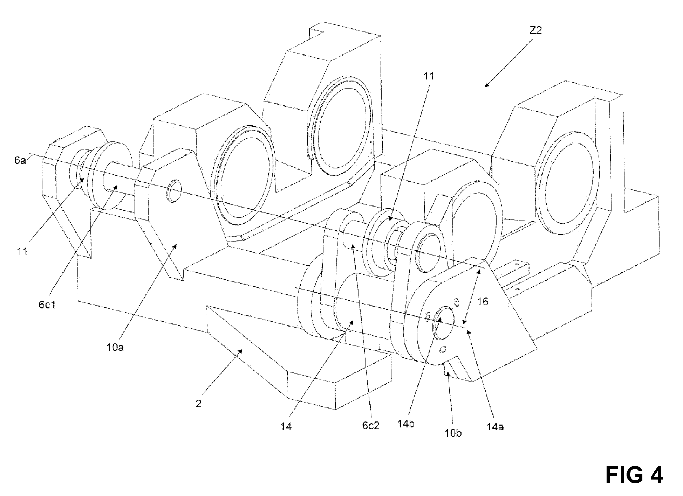

The work piece 4 is carried on and fed through the wire web 3a by a work piece handling unit 5 of the wire saw W which work piece handling unit 5 comprises a pivotable handling arm 6 being pivotably mounted about at least one shaft 6c, 6c1 and 6c2 (Fig.3 and 4) on the base structure 2. A rotation axis of the shaft 6c of said pivotable handling arm 6 is designated by 6a. By this pivotable handling arm 6 the work piece 4 ― which may be fixed directly or indirectly on the free end of the pivotable handling arm 6 - is fed to and guided through the wire web 3a along an arched (circular) path as indicated in Fig 1 by an arrow 6b during cutting.

The wire saw W of Fig. 1 comprises an additional rocking unit 7 which is arranged on and pivotably together with the pivotable handling arm 6 of the work piece handling unit 5. In Fig. 1, the work piece 4 is mounted on the rocking unit 7 and this arrangement allows a second possibility to align the work piece 4 with respect to the wire web 3a (which will be explained later). The rocking unit 7 is fixed on the pivotable handling arm 6 and holds the work piece 4. The rocking unit 7 can be rotated together with the work piece 4 around its rocking axis 7b by means of at least one rotary drive 7a, preferably an electric or hydraulic motor. Further preferably one motor 7a is mounted on each side of the rocking unit 7.

For moving the pivotable handling arm 6 along the arrow 6b an actuator 8 is provided that may preferably be a known hydraulic, pneumatic or electric piston-cylinder unit. It is designed to be able to rotate the pivotable handling arm 6 with the work piece along its arched path between its start position (illustrated in Fig. 1) and its cutting working position ― when the work piece 4 touches and sinks through the wire web 3a

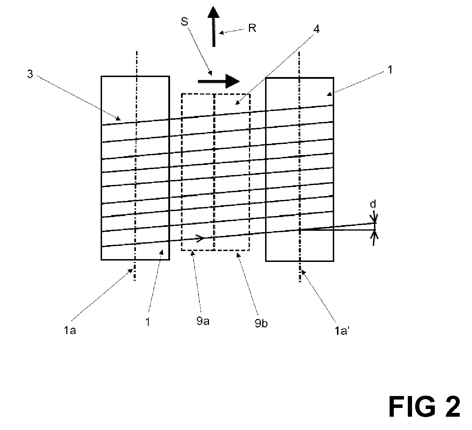

Fig. 2 illustrates schematically the misalignment problem of known wire saws (especially that of Fig.3 of the above cited JPA11188602 representing the closest prior art). As can be seen in Fig. 2 (using the same reference characters of Fig. 1), the cutting section of the cutting wires 3 do not extend just perpendicularly to the wire-guiding rollers 1 and 1', but with a small angular deviation d from the direction perpendicular to an axis 1 a and 1 a' of said rollers 1 and 1', (radial plane of said axes) respectively. This deviation angle between the wire segment (slanted black line) and the radial plane (horizontal black line) of the rotating axis 6a of the pivotable handling arm (not shown) is designated by "d" in Fig. 2.

Due to the arched travelling path of the work piece on the handling arm with regard to the cutting wires 3, a first position 9a of the work piece 4 - where the cutting wires 3 first cut into the work piece 4 - will shift ― in the prior art - during the continued cutting process in a direction (designated by an arrow S) into a second position 9b. Said arrow S is perpendicular to the axis 6a of the pivoting handling arm. The work piece 4 now "sees" a relative lateral movement of the cutting wires 3 and the wire web respectively, as designated by an arrow R., This reduces the product quality substantially because the surfaces of the wafers are not flat if continuously cut as shown in Fig.2.

That is why one of the most important novel features of the present invention is that the wire saw W and its work piece handling unit 5 are provided with at least one adjusting unit Z, which has the task to reduce, preferably to eliminate the above explained angular deviation problem before the cutting step in order to improve the product quality.

In the embodiment of Fig. 1, the pivotable handling arm 6 of the work piece handling unit 5 is associated with the rocking unit 7 (as mentioned above) having the rocking axis 7b, which is parallel with the pivoting axis 6a. The rocking unit 7 has two short shafts 7c, which are formed here as elongated internal end parts. Between these shafts 7c is empty space for the work piece. Note that the pivoting axis 6a is the (imaginary) rotational axis of the handling arm, which not necessarily coincides with any mechanical shafts.

In this preferred arrangement there is an inventive possibility for angular adjustment of the pivoting axis 6a which can be better seen in Fig. 3 and 4 by means of the adjusting unit Z1 and Z2 respectively.

For the relative angular adjustment of the pivoting axis 6a at least one end of the at least one pivoting shaft 6c2 is equipped with the adjusting unit Z1 and Z2.

A further possibility for adjusting the work piece 4 relative to the web 3a can be provided by bearing the rocking unit 7 adjustable, so that the rocking unit 7 can be rotatably adjusted around a vertical axis not shown.

Under such circumstances, the rocking axis 7b could be adjusted alone instead of adjusting the pivoting axis 6a, or vice versa, or in addition to that by means of the corresponding adjusting unit Z.

Preferred however is to always keep the rocking axis in parallel to the pivoting axis and to just adjust the work piece relative to the rocking axis or relative to the handling arm respectively.

With said choice of adjustment possibilities or said combination thereof, the work piece 4 can be cut exactly parallel to any desired plane, in particular a crystal lattice, and perfectly flat or with only minimal or without any deviations. However it has to be noted, that in order to cut the wafers with a plane surface the inventive adjustability of the pivoting axis 6a is essential. It is to be noted that such an embodiment of the wire saw W according to Fig. 1 is also possible (not illustrated), wherein a single shaft 6c through the pivotable handling arm 6 with axis 6a is provided for the pivotable handling arm 6. Any device could be also provided but without any rocking unit 7. In this case, the work piece 4 would be fixed directly on the pivotable handling arm 6. On the other hand, the ends of the shaft 6c could be embedded in the supporting units 10 of the base structure 2 in such a manner that at least the first end of the shaft 6c would be associated with the adjusting unit Z providing relative movement for the first end of the shaft 6c, while the second end of the shaft 6c would be equally embedded preferably in a ball bearing (see Fig.6) in order to follow the required adjustment of the shaft 6c and pivoting axis 6a.

In Fig. 3 a detail of a first embodiment of the wire saw W according to the invention, the adjusting unit Z1 is shown in detail. It allows the relative angular adjustment of the pivotable handling arm 6 and work piece 4 respectively with regard to the cutting wires 3. For this purpose basically at least the pivoting axis 6a of the pivotable handling arm 6 is adjustable, preferably within a plane, essentially parallel to the horizontal working plane 3b of the wire web 3a by the proposed adjusting unit Z1. If the direction of the wires 3 should be changed after some time, the adjustment of the pivoting axis 6a could be corrected by the adjusting unit Z1.

Preferably, when a rocking unit 7 is present, the rocking axis 7b of said unit should be parallel to the pivoting axis 6a. However the work piece should be adjustable relative to the rocking axis. With said combination of adjustability, the work piece can be cut exactly parallel to any desired plane, in particular a crystal lattice, and perfectly flat or with only minimal deviations.

As it can be seen in Fig. 3, the common pivoting axis 6a of the pivotable handling arm 6 (here not illustrated) is preferably defined by at least two separate and axially spaced apart short shafts 6c1 and 6c2 carrying the pivotable handling arm 6 and supported in the base structure 2 by at least two supporting units 10a and 10b. The supporting units 10a and 10b according to this embodiment of the invention are fixed to the base structure 2 or they are integrated parts thereof. One end of shaft 6c2 is movable.

For being able to adjust the pivoting axis 6a by the adjusting unit Z1, at least one of said supporting units 10a and 10b, and consequently the respective shaft 6c1 or 6c2 thereof, could be relatively moved in a direction having at least a component parallel to the plane 3b of the cutting wires 3. When moving the pivotable handling arm 6, the supporting units 10a and 10b would then maintain their spatial orientation. This embodiment is not shown, as here the supporting units appear fixedly connected to the base structure.

The embodiment shown in Fig.3 discloses bearing arrangements 11 that are provided for part shafts 6c1 and 6c2. In a base status those shafts might be complete in alignment with each other. However the invention provides that a slight angular adjustment of any of the shafts 6c1 and 6c2, here the shaft 6c2 is adjustable in an radial direction relative to the other shaft 6c1. These bearings 11 could be ball bearings (see Fig.6) or any other conventional bearing, which allow an radial adjustment of the shafts 6c1 and 6c2 inside the bearings with minimal clearance.

For displacing one of the shafts 6c1 and 6c2 (here the distal end of the part shaft 6c2) and thereby the pivoting axis 6a, the adjusting unit Z1 is provided with an adjusting element, preferably with a wedge 13 abutting a flatted end of the shaft 6c2 in an elongated opening 12 of the supporting unit 10b, as shown in Fig. 3. This wedge 13 can be moved relatively with respect to the flat end of the shaft 6C2 and the supporting unit 10b. When moving the wedge 13 vertically downwards or axially inwards it exerts a pressure force onto the supporting unit 10b and the (flat) end of the shaft 6c2, and thereby it pushes the shaft end away from the wire web 3a - and vice-versa, while the reaction force of the supporting unit 10b biases the shaft end onto the wedge 13. The bearings 11 for the other shaft 6c1 allow during this step an adjustment of the pivoting axis 6a in a plane parallel to the wire web 3a. Hence the combination of these features provokes the desired angular correcting displacement of the pivoting axis 6a for adjusting the orientation of the work piece 4 with respect to the wire web 3a.

In another embodiment of the adjusting unit Z (not illustrated), as an adjusting element a bolt can be provided for acting on the wedge 13 for moving it with respect to the supporting unit 10b and the shaft 6c2.

Another preferred embodiment of the adjusting unit Z2 is shown in Fig. 4. This arrangement differs from that of Fig. 3 in that at least one of the supporting units 10b for embedding the corresponding shaft 6c2 is not fixed on the base structure 2, but is mounted on a pivoting support 14 being rotatably arranged around an axis 14a of a shaft 14b parallel to the shafts 6c1 and 6c2. The pivoting support 14 of the adjusting unit Z2 can be relatively rotated by an adjustment bolt (not illustrated) fixed on the pivoting support 14 or on the base structure 2.

To achieve the predetermined mutual relation between the displacement of the shaft 6c2 parallel to the wire web and a movement perpendicular to that wire web, a distance 16 between the pivoting axis 14a of the pivoting support 14 and the axis 6a, and also between its bearings 12, should be as great as possible, e.g. 5 or 10 times larger, in particular, said distance 16 has to be considerably greater than the displacement in a direction parallel to the cutting wires 3.

When using the embodiment of the invention with at least one pivoting support 14 in the adjusting unit Z2 (Fig. 4) for adjusting the orientation of the pivoting axis 6a defined by two shafts 6c1 and 6c2, then necessary adjustment can be carried out by this single pivoting support 14.

The bearing 11 again (as in the embodiment of Fig.3) takes the load from the angular offset of the pivotable handling arm 6, when the shafts 6c1 and 6c2 leave alignment.

In other embodiments, the adjusting unit Z2 can be provided with such a pivoting support 14 for each shafts 6c1 and 6c2 (not illustrated). In these cases, during the adjusting step both pivoting supports 14 are rotatable in opposite directions to achieve that both supporting units 10a and 10b are lowered or raised simultaneously, allowing a pivoting of the pivoting supports 14 rotation around the then common axis 14a only, in a plane parallel to the wire web 3a.

When the rocking unit 7 is provided (see Fig. 1) for the wire saw W, a possible adjustment of its rocking axis 7b can be achieved by the adjusting unit Z similar to the adjustment of that of the pivoting axis 6a, as described above.

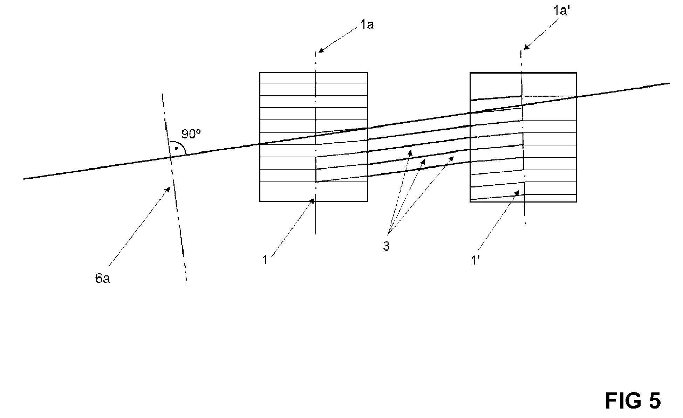

Fig. 5 depicts in schematic representation the advantages of the adjustment of the pivoting axis 6a of the pivotable handling arm 6 by means of the adjusting unit Z, Z1 and Z2 according to the invention.

It is to be noted that, in a given case, the pivoting axis 6a needs not to be parallel to the axis 1 a, 1 a' of the wire-guiding rollers 1, 1' in operation, but it is a advised that the pivoting axis 6a should be normally perpendicular to the cutting wires segments 3 that extend freely between the wire guide rollers 1, 1'. That means that the sections lie within radial planes of the pivoting axis. When such alignment is provided according to the invention even the grooves on one roll 1 have not to be perfectly aligned with the grooves on the other roll 1. Every offset situation due to misalignment of the work piece movement relative to the wire web 3a can be minimized or even omitted totally by the adjusting unit Z according to the invention.

For a higher precision in the adjustment of the pivoting axis 6a and the rocking axis 7b in relation to the cutting wires 3, the wire saw W can be provided with a sensor arrangement (not illustrated) for sensing and comparing the actual angle value between at least one cutting wire 3 and any of the shafts 6c1, 6c2, 7b and/or a predetermined characterizing plane of the work piece 4. Depending on the result of this continuous or intermittent measurement by said sensor arrangement, the respective axis 6a, 7b can be adjusted by means of the adjusting unit Z, Z1 and Z2 according to the invention manually, or according to a further preferred embodiment, automatically.

For this purpose, the sensor arrangement may be connected to a control system of the wire saw W (not shown), which is automatically operating any one of the adjusting elements, e.g. the adjusting elements, for example wedge 13, the pivoting member(s) 14, the movable supporting unit(s) 10a and 10b, any of the adjustment bolts, or the like, to minimize the angular deviation d from 90 degrees of the nominal angle between the at least one cutting wire 3 and the pivoting axis 6a of the pivotable handling arm (6) and/or the rocking axis 7b of the rocking unit 7, if any, and/or the predetermined characterizing plane of the work piece 4, e.g. a front surface 4a of the work piece 4 (Fig. 1) .

### List of Reference Characters:

- W: wire saw
- 1 and 1': wire-guiding roller
- 1a and 1a': wire-guiding roller axis
- 2: base structure
- 3: cutting wire
- 3a: wire web
- 3b: working plane (of wires)
- 4: work piece
- 4a: front surface (of work piece)
- 5: work piece handling unit
- 6: pivotable handling arm
- 6a: pivoting axis
- 6b: arrow (indicating the arched path of arm)
- 6c1 and 6c2: pivoting shaft (part shaft)
- 7: rocking unit
- 7a: rotary drive, motor
- 7b: rocking axis
- 7c: rocking shaft (part shaft)
- 8: actuator (for the pivotable handling arm)
- 9a: first work piece position
- 9b: second work piece position
- 10a and 10b: support unit
- 11: Bearing
- 12: Opening
- 13: adjusting member, wedge
- 14: pivoting support
- 14a: axis (of pivoting support)
- 14b: Shaft
- 15: Arrow
- 16: Distance
- d: angular deviation between the at least one cutting wire segment (3) touching the work piece during cutting and a radial plane of the pivoting axis (6a)
- S; R: arrows (movement of work piece positions)
- Z;: adjusting unit Z1; Z2 for the pivoting axis

## Claims

1. Wire saw (W) for cutting multiple wafers from a work piece (4), in particular a work piece of hard and brittle material, such as silicon or sapphire, comprising a base structure (2) bearing at least two wire-guiding rollers (1 and 1') which support a wire web (3a) comprising one or more cutting wires (3) and defining a working plane (3b) facing the work piece (4) to be cut; a work piece handling unit (5) with a pivotable handling arm (6) pivotably mounted around a pivoting axis (6a) supported by said base structure (2); said work piece handling unit (5) and said base structure (2) being adapted for moving the work piece (4) and the wire web (3a) along a curved path (6b) around the pivoting axis (6a) relatively towards each other and the wire web (3a) through the work piece for cutting the work piece (4) into multiple wafers; wherein said pivotable handling arm (6) of the work piece handling unit (5) is adapted to carry and hold the work piece (4) during the cutting process, **characterized in that** the wire saw (W) is provided with at least one adjusting unit (Z; Z1; Z2) for reducing or compensating or adjusting an angular deviation (d) between the at least one cutting wire segment (3) touching the work piece during cutting and a radial plane of the pivoting axis (6a).

2. Wire saw according to claim 1, **characterized in that** said adjusting unit (Z;Z1;Z2) biases said pivoting axis (6a) so that at least the relative angular position of the pivoting axis (6a) and the radial plane respectively is adjustable within a plane essentially parallel or parallel to the working plane (3b) of the wire web (3a) and/or that the pivoting axis (6a) extends in a plane essentially parallel or parallel to the working plane (3b) of the wire web (3a).

3. Wire saw according to claims 1 or 2, **characterized in that** the pivotable handling arm (6) comprises means (7) for mounting and holding a work piece (4) so that when cutting the mounted work piece on the pivotable handling arm has a predetermined characterizing plane (4a) of, on or in the work piece (4) parallel to the at least one wire segment (3) between the wire guide rollers .

4. Wire saw according to claims 1, 2 or 3, **characterized in that** at least one shaft (6c; 6c1, 6c2) defines said pivoting axis (6a) of the pivotable handling arm (6) and carries the pivotable handling arm (6), the at least one shaft being supported in one or more supporting units (10a, 10b) connected to the base structure (2), wherein at least one end of the at least one shaft (6c; 6c1, 6c2) is movably arranged in said supporting units (10a, 10b) in a direction having at least one component parallel to the said working plane (3b).

5. Wire saw according to claim 1-4, **characterized in that** one shaft defines the pivoting axis (6a) of the pivotable handling arm (6), said shaft being supported at each end by one of said supporting units (10a, 10b) wherein at least one of said ends is movable relative to one of said supporting units (10b) or that at least one of said supporting units (10b) is movable relative to said base structure (2) by means of the adjusting unit (Z; Z1; Z2) at least in a direction having at least one component parallel to the cutting wires (3) in the working plane (3b).

6. Wire saw according to claim 1 to 5, **characterized in that** two axially spaced shafts (6c; 6c1, 6c2) are provided and define the pivoting axis (6a) of the pivotable handling arm (6), wherein at least one of the shafts (6c2) or at least one end of at least one shaft or at least one of said supporting units (10b) is movable relative to said base structure (2) by said adjusting unit (Z;Z1;Z2) at least in a direction having at least one component parallel to the cutting wires (3) in the working plane (3b).

7. Wire saw according to one of the claims 4 to 6, **characterized in that** at least one shaft (6c; 6c1, 6c2) is provided with a bearing (11) allowing an angular adjustment of the shaft end within said bearing.

8. Wire saw according to one of the claims 4 to 7, **characterized in that** the adjusting unit (Z; Z1; Z2) comprises an adjusting element, preferably a wedge (13), cooperating with the shaft (6c; 6c1, 6c2) and/or with one of the movable supporting units (10b) and the base structure (2) respectively.

9. Wire saw according to one of the claims 4 to 7, **characterized in that** the adjusting element, preferably a wedge (13) is displaced in an opening (12) of the support unit (10b) embedding also the end of the shaft (6c2) and that said adjusting element is controllable by a further adjusting element, especially a bolt.

10. Wire saw according to one of the preceding claims, **characterized in that** the adjusting unit (Z; Z1; Z2) cooperates with a support (14) arranged in an adjustable manner around a shaft (14b) embedded in the supporting unit (10b) or base structure (2), said shaft (14b) preferably having an axis (14a) parallel to the shaft (6c2), and wherein preferably an adjustment bolt for acting on the support (14) or an intermediate lever is provided for adjusting the support (14) relative to said supporting unit (10b) and/or base structure (2) respectively.

11. Wire saw according to one of the claims 9 or 10, **characterized in that** a distance (16) between the axis (14a) of the shaft (14b) and the axis (6a) of the shaft (6c2) is greater than the desired displacement in the direction parallel to the cutting wires (3) in the working plane (3b).

12. Wire saw according to one of the preceding claims comprising a sensor arrangement capable of detecting and comparing the angle between the at least one cutting wire segment (3) in the wire web (3a) and radial plane of the pivoting axis (6a), and/or a preselected characterizing plane (4a) of the work piece (4) or capable of measuring the displacement of the shaft (6c2) relative to the support unit (10b) and or base structure (2) deducing from that the angle between the radial plane of the axis (6a) and the cutting wire segment (3) .

13. Wire saw according to claim 12, **characterized in that** the sensor arrangement is connected to a control system for operating at least one of the following parts of the wire saw W: the adjusting unit (Z;Z1;Z2) or further adjustment element respectively, the rotatable support (14) and the movable supporting units (10a, 10b) .

14. Method for cutting a work piece, in particular a work piece of hard and brittle material, especially by using a wire saw (W) according to any of claims 1 to 13, comprising the steps of providing a wire web (3a) by one or more cutting wires (3) wound around wire-guiding rollers (1 and 1') and defining a working plane (3b) facing the work piece (4) to be cut; and providing a work piece handling unit (5) with a pivotable handling arm (6) mounted on the base structure (2) pivotable along an angular path (6b) around a pivoting axis (6a) to and through the wire web (3a) for cutting the work piece (4) into a plurality of wafers, **characterized by** the steps of detecting an actual angle between the at least one cutting wire segment (3) and a radial plane of the pivoting axis (6a) comparing the detected actual angle value with the desired angle and then adjusting the actual position of the at least one shaft (6c; 6c1, 6c2; 7c) preferably by using an adjusting unit (Z; Z1; Z2) to eliminate or at least minimize the angular deviation (d) from the desired angle which is preferably 0°.

15. Method according to claim14, **characterized by** carrying out the detecting, comparing and adjusting steps preferably by means of said adjusting unit (Z; Z1; Z2) automatically.
